(19) Europäisches Patentamt
European Patent Office
Office européen des brevets

(11) **EP 2 364 597 A1**

(12) **EUROPÄISCHE PATENTANMELDUNG**

(43) Veröffentlichungstag:
**14.09.2011 Patentblatt 2011/37**

(51) Int Cl.:
***A22C 13/00*** *(2006.01)*

(21) Anmeldenummer: **10002469.4**

(22) Anmeldetag: **10.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **CaseTech GmbH**
**29699 Bomlitz (DE)**

(72) Erfinder:
• **Henze-Wethkamp, Heinrich**
**29664 Walsrode (DE)**
• **Krallmann, Anton**
**29862 Bad Fallingbostel (DE)**

(74) Vertreter: **Polypatent**
**Braunsberger Feld 29**
**51429 Bergisch Gladbach (DE)**

(54) **Verkranzte Schlauchhülle mit gleichmäßiger Hüllendicke**

(57)    Die vorliegende Erfindung betrifft gekranzte Schlauchhüllen, insbesondere für Nahrungsmittel, mit gleichmäßiger Hüllendicke bezogen auf den Kaliberumfang sowie ein Verfahren zum Herstellen solcher Schlauchhüllen.

**Fig. 1**

EP 2 364 597 A1

**Beschreibung**

Die vorliegende Erfindung betrifft gekranzte Schlauchhüllen, insbesondere für Nahrungsmittel, mit gleichmäßiger Hüllendicke bezogen auf den Kaliberumfang sowie ein Verfahren zum Herstellen solcher Schlauchhüllen.

Bei der industriellen Brüh- und Kochwurstherstellung haben sich biaxial gereckte Kunststoffhüllen auf der Basis Polyamid (PA) in vielerlei Hinsicht seit Jahren in gerader und auch in gekranzter Form bewährt. Insbesondere mehrschichtige Hüllen mit größer gleich 3 Schichten, die uniaxial oder biaxial verstreckt wurden, eignen sich für diese Anforderungen hervorragend.

In der DE 43 39 337 wird eine fünfschichtige, biaxial verstreckte Schlauchfolie zur Verpackung und Umhüllung von Lebensmitteln beschrieben. Diese Hülle ist dadurch gekennzeichnet, dass sie aus einer inneren und äußeren Schicht aus dem gleichen Polyamidmaterial und einer mittleren Polyolefinschicht sowie zwei aus dem gleichen Material bestehenden Haftvermittlerschichten aufgebaut ist.

In der EP 530 538 wird eine fünfschichtig coextrudierte biaxial gereckte Schlauchfolie mit mindestens 3 PA-Schichten beschrieben, wobei zwischen den innen und außenliegenden PA-Schichten Polymerschichten mit wasserdampf- und sauerstoffsperrenden Charakter eingebunden sind.

In der DE19650873A1 wird ein Verfahren beschrieben, bei dem der aufgeblasene Kunststoffdarm in einem Wendelbereich von 360 ° von außen und von innen über bestimmte angepasste Rollen geführt und dort verformt wird. In der Druckschrift wird weiter beschrieben, dass die Schlauchhülle von der Innenseite des Kranzes also radial von innen nach außen erwärmt wird. Nach Verlassen der 360 ° Wendel hat der Darm seine Kranzform erreicht.

In der EP0878318A1 wird ein bedruckter Darm beschrieben der mit positiv, d.h. vergrößert, verzerrtem Druckmotiv bedruckt wurde, um nach dem Kranzen, bei dem der Darm schrumpft, wieder seine unverzerrte Form zu bekommen.

In der EP0744273A1 wird ein kontinuierliches Kranzverfahren beschrieben bei dem die Verformung der Schlauchhülle dadurch erreicht wird, dass der Überdruck für den aufgeblasene Schlauchhülle zwischen zwei Quetschwalzenpaare gehalten und die Schlauchhülle in dem Kranzwerkstück über in sich drehende Stangen verformt wird.

Die DE19607340A1 beschreibt ein Verfahren, bei dem die komplette Rolle von ca. 1000 m im aufgeblasenen Zustand aufgerollt und anschließend beim Abrollen über ein heißes, drehendes Ofenrohr gezogen wird und so seine Kranzform erhält.

Bei den Verfahren zum Kranzen von Schlauchhüllen nach dem Stand der Technik gibt es mindestens zwei wesentliche Nachteile: Alle genannten Verfahren beruhen auf dem Schrumpfungsprinzip, d.h. die Verformung wird so vollzogen, dass die Schlauchhülle auf einer Seite schrumpft und somit kürzer wird. Dabei erhält die kürzere Seite der gekranzten Schlauchhülle eine größere Schichtdicke. Solche Schlauchhüllen haben somit ungleichmäßige Schichtdicken bezogen auf den Kaliberumfang. Die unterschiedlichen Dicken über den Umfang haben zur Folge, dass unterschiedliche Durchlässigkeiten der Hülle gegeben sind. Weiterhin geht mit dem Schrumpfprozess eine Verkürzung der nutzbaren Länge einher, so dass beim Kranzprozess ein Teil der eingeflossenen Länge für den Kunden bzw. für den weiteren Verarbeitungsschritt nicht nutzbar ist.

Ziel der vorliegenden Erfindung war es, gekranzte Schlauchhüllen herzustellen, die bezogen auf den Kaliberumfang eine relativ gleichmäßige Dicke aufweisen. Weiterhin sollen die Sperr- bzw. Durchlässigkeitseigenschaften über den Umfang der Hülle möglichst gleich sein. Aus wirtschaftlichen Gründen sollte die nutzbare Schlauchlänge durch das Kranzverfahren nicht verkürzt werden.

Gelöst wird diese Aufgabe durch eine gleichzeitige Dehnung der Schlauchhülle über den ganzen oder zumindest fast den ganzen Kaliberumfang beim Kranzprozess. Die Krümmung des Darms wird an allen Stellen des Umfangs neben üblichen Erwärmen durch zusätzliche Dehnung der Hülle erreicht. Nach der Dehnung ist dann die Schlauchdicke an allen Stellen des Umfanges im Wesentlichen gleich. Zum Kranzen kann eine an sich bekannte Kranzvorrichtung aus dem Stand der Technik, z.B. aus DE19650873A1, verwendet werden, die so modifiziert und betrieben wird, dass eine zusätzliche Dehnung auf die Hülle ausgeübt wird.

Gegenstand der Erfindung ist somit ein Verfahren zum Herstellen einer gekranzten Schlauchhülle mit gleichmäßiger Schichtdicke über ihren ganzen Kaliberumfang mittels einer ein Kranzwerkzeug umfassenden Kranzvorrichtung, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, dadurch gekennzeichnet, dass mittels Kraftübertragung durch die Führungsrollen zusätzlich ein solcher Zug auf die Schlauchhülle ausgeübt wird, dass diese insgesamt gestreckt wird.

Die Wärmebehandlung des durch die Kranzvorrichtung geführten Schlauches erfolgt vorzugsweise durch an die Innenseite der Schlauchwendel herangeführte Heißluft und gleichmäßiges Verteilen der Heißluft über den Umfang der Schlauchhülle.

Zusätzlich kann bei der erfindungsgemäß modifizierten und betriebenen Anlage im Gegensatz zum Stand der Technik mit einer Vorheizung des Hüllenmaterials vor dem Einlaufen in das Kranzwerkzeug und/oder mit einer gezielten Erwärmung auch von außen innerhalb des Kranzwerkzeuges gearbeitet werden. Bevorzugt ist, dass die Schlauchhülle sowohl vorgeheizt als auch innerhalb des Kranzwerkzeuges von außen erwärmt wird. Durch diese Maßnahmen - in Kombination mit dem ausgeübten Zug - gelingt es überraschenderweise, den Darm über den kompletten Kaliberumfang zu dehnen. Das ist insofern erstaunlich, da auf der Innenseite des gekranzten Darmes deutlich weniger als auf der Außenseite des gekranzten Darmes in Längsrichtung gedehnt wird. Trotz dieses unterschiedlichen Längsdehnungsverhaltens wird nach dem Verlassen eine gleichmäßige Dicke über den Umfang des Darmes erreicht. Offenbar findet eine Materialverschiebung quer zur Längsseite des Darms statt.

Die Vorheizung kann den Darm in bestimmten Sektionen um den Umfang oder über den gesamten Umfang umschließen, z.B. in einer abgeteilten Ringform oder in einer geschlossenen Ringform. Ein umschlossener Ring kann aus einem Hohlraum bestehen, der mit einem Lochgitter zum Darm ausgeführt ist. Dieser Hohlraum wird mit warmer Luft beaufschlagt, die durch das Lochgitter zum Darm gelangt. Die Vorheizung vor dem Einlaufen in das Kranzwerkzeug und auch die gezielte Aufheizung von außen innerhalb des Kranzwerkzeuges kann mit warmer Luft oder auch mit Infra-Rot-Strahlung durchgeführt werden.

Der erfindungsgemäße mittels Kraftübertragung durch die Führungsrollen zusätzlich ausgeübte Zug kann z.B. dadurch bewirkt werden, dass das Kranzwerkzeug inklusive der Führungsrollen mehr als nur eine Wendel von ca. 1 x 360 Grad Länge umfasst, die im Stand der Technik vorgesehen sind. Bevorzugt ist das Kranzwerkzeug so konstruiert, dass die die Führungsrollen umfassende Wendel eine Länge von 400 bis 700 Grad oder sogar mehr umfasst. Zusätzlich können die Führungsrollen eine reibfähige Oberfläche aufweisen oder insgesamt aus einem reibfähigen Material aufgebaut sein.

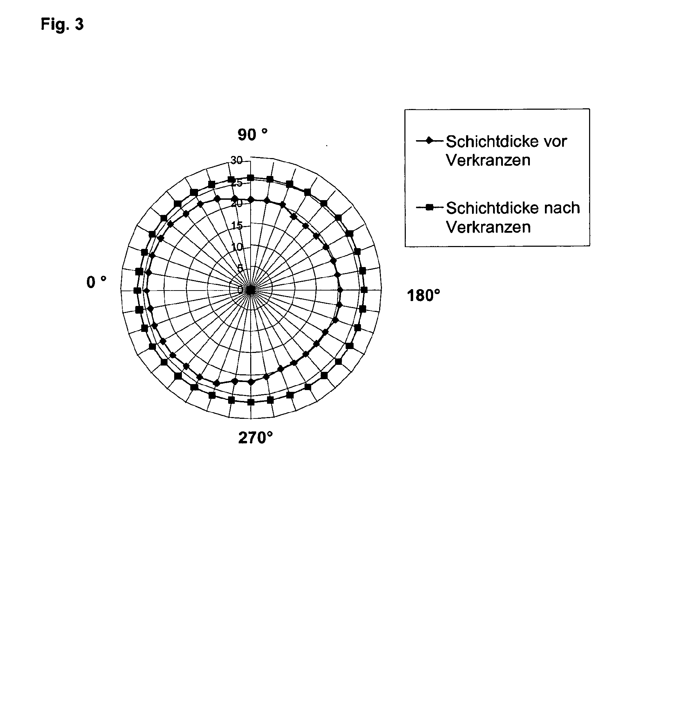

Durch das erfindungsgemäße Verfahren bzw. die erfindungsgemäße Modifizierung und der erfindungsgemäße Betrieb der Kranzvorrichtung wird bevorzugt erreicht, dass die Schlauchhülle das Kranzwerkzeug mit einer auf den Kaliberumfang bezogenen gleichmäßigen Hüllendicke verlässt. "Gleichmäßige Hüllendicke" bedeutet dabei, dass bei mindestens 30 in jeweils gleichem Abstand über den Kaliberumfang verteilten Messungen der Hüllendicke der Durchschnitt der 5 höchsten Werte der Dicke höchstens 1,28-fach, bevorzugt höchstens 1,25-fach, besonders bevorzugt höchstens 1,22-fach, über dem Durchschnitt der 5 niedrigsten Werte der Dicke liegt. Vergleiche hierzu auch Figur 3 und Tabelle 1.

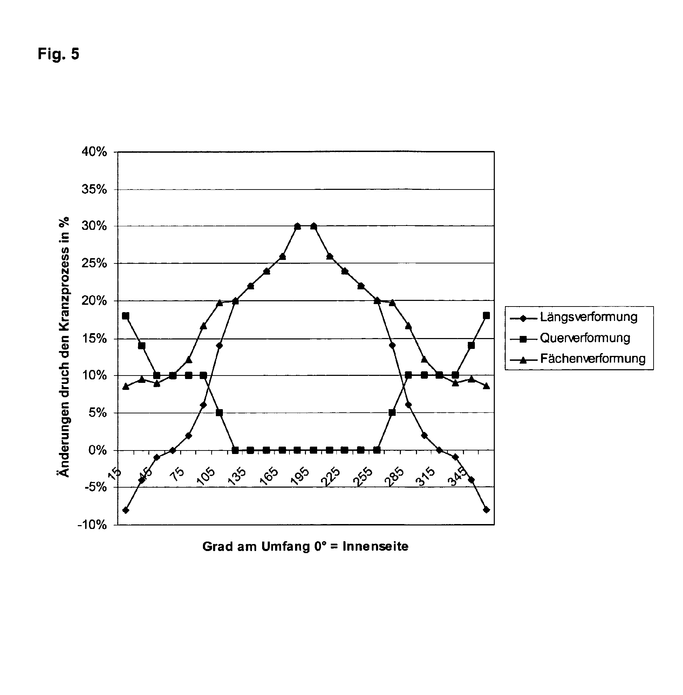

Durch das erfindungsgemäße Verfahren bzw. den erfindungsgemäßen Betrieb einer Kranzvorrichtung wird bevorzugt auch erreicht, dass die Schlauchhülle das Kranzwerkzeug mit einer Längsverformung verlässt, die größer -30%, bevorzugt größer -20%, besonders bevorzugt größer -10%, ist. Dabei bezieht sich die Angabe der Längsverformung relativ auf die Länge der unverkranzt eingesetzten Hülle. Außerdem gilt hier, dass die genannten Verformungswerte für jeden auf dem Kaliberumfang liegenden Abschnitt zutreffen. Wie die Figur 5 anschaulich zeigt, werden negative Längsverformungen (Längsschrumpf) aber praktisch nur im innenliegenden Bereich (z.B. 0-60° und 300-360°) des Kaliberumfanges erzielt. Im größtem Bereich des Kaliberumfanges (z.B. 60-300°) werden nach dem erfindungsgemäßen Verfahren positive Werte für die Längsverformung (Längsdehnung) erzielt (z.B. Werte von bis +30% in Figur 5).

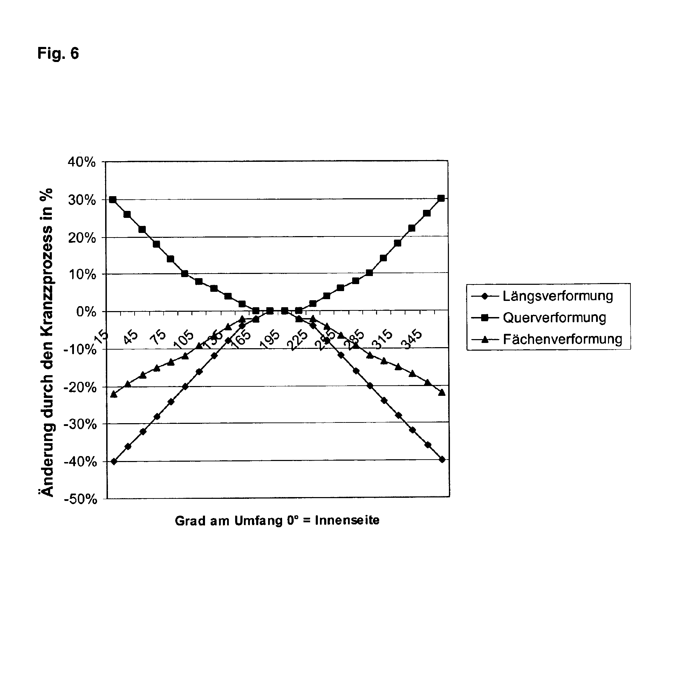

Durch das erfindungsgemäße Verfahren wird in der Regel auch erreicht, dass die Schlauchhülle das Kranzwerkzeug mit einer Querverformung verlässt, die größer -10%, bevorzugt größer -5%, besonders bevorzugt größer oder gleich 0%, ist. Dabei bezieht sich die Angabe der Querverformung relativ auf die Länge eines Abschnitts auf dem Kaliberumfang der unverkranzt eingesetzten Hülle. Außerdem gilt auch hier, dass die genannten Verformungswerte für jeden auf dem Kaliberumfang liegenden Abschnitt zutreffen. Figur 5 zeigt auch anschaulich, dass negative Querverformungen (Querschrumpf) aber praktisch nicht auftritt. Im außenliegenden Bereich des Kaliberumfanges (z.B. etwa 110-250° in Figur 5) liegen die Werte für die Querverformung um 0%. Im innenliegenden Bereich (z.B. 0-60° und 300-360°) werden z.B. Werte von +10 bis +18% (Querdehnung) erreicht. Wie ein Vergleich mit Figur 6 zeigt, werden ähnliche Werte und Verteilungen der Querdehnung auch bei gekranzten Hüllen erzielt, die nach herkömmlichem Verfahren gekranzt wurden.

Bezüglich der Flächenreckung ist festzustellen, dass die Schlauchhülle das Kranzwerkzeug bevorzugt mit einer Flächenverformung in jedem auf dem Kaliberumfang liegenden Abschnitt und bezogen auf die unverkranzt eingesetzte Hülle von größer -10% (Flächenschrumpf), bevorzugt größer 0%, besonders bevorzugt größer 5% (Flächenreck), verlässt. Figur 5 zeigt zum Beispiel, dass eine negative Flächenverformung (Flächenschrumpf) praktisch nicht auftritt. Im innenliegenden Bereich des Kaliberumfanges (z.B. 0-60° und 300-360°) liegen die Werte für die Flächenverformung bei mindestens + 5°. Im außenliegenden Bereich (z.B. 110-250° in Figur 5) werden z.B. Werte von +20%, +25% und +30% erreicht. Wie ein Vergleich mit Figur 6 zeigt, wird bei gekranzten Hüllen, die nach herkömmlichem Verfahren gekranzt wurden, praktisch für jeden auf dem Kaliberumfang liegenden Abschnitt negative Werte erzielt, d.h. der Darm schrumpft an praktisch jeder Stelle beim Kranzen. Höchstens im außenliegenden Bereich um 180° tendiert die Flächenverformung gegen 0%.

Erfindungsgemäß ist das Verfahren, wenn die Schlauchhülle, die das Kranzwerkzeug verlässt "insgesamt gestreckt" wird. Darunter ist zu verstehen, dass die Flächenverformung insgesamt, also über die Summe aller auf dem Kaliberumfang liegenden Abschnitte, positiv ist. Das heißt, dass das Verfahren dann erfindungsgemäß ist bzw. die Kranzvorrichtung erfindungsgemäß betrieben wird, wenn die Schlauchhülle, die das Kranzwerkzeug verlässt, ein (wie beispielsweise in den Figuren 5 und 6 gezeigt) mit einem positiven Flächenintegral aufweist ("positive Gesamtflächenverformung"). Dabei wird die Fläche zwischen x-Achse und Kurve im positive y-Achsenbereich positiv gewertet und die Fläche zwischen x-Achse und Kurve im negativen y-Achsenbereich negativ. Zur Bestimmung der Gesamtflächenverformung muss ein Querverformungsprofil und ein Längsverformungsprofil mit jeweils mindestens 24 in jeweils gleichem Abstand über den Kaliberumfang verteilten Messwerten erstellt werden (wie beispielsweise in den Figuren 5 und 6 gezeigt). Dazu werden vor dem Kranzprozess auf die Schlauchhülle quadratische Karos mit 5 mm Kantenlänge im Flexodruck oder im Tiefdruck gedruckt. Nach dem Kranzprozess werden die vormals quadratischen Karos in ihren Dimensionen und bezogen auf der Position am Umfang mit einem Lineal vermessen. Aus den gemessenen Quer- und Längskantenlängen werden dann Querverformungsprofil und Längsverformungsprofil erstellt. Aus diesen wird dann ein Flächenverformungsprofil gebildet (wie z.B. in den Figuren 5 und 6 gezeigt).

Mit dem erfindungsgemäßen Verfahren können Schlauchhüllen erhalten werden, die unter anderem folgende Vorteile aufweisen:

Bei den Schlauchhüllen wird über den ganzen Kaliberumfang eine gleichmäßige Durchlässigkeit für z.B. Rauch und damit auch eine gleichmäßige Verfärbung der Wurstoberfläche nach Räucherung erreicht. Somit wird auch über den ganzen Umfang die gleiche Geschmackintensität für den Rauch beim Verkosten der geräucherten Wurst erzielt. Die gleichen Vorteile gelten auch für die Sperreigenschaften für z.B. einen rauchundurchlässigen Darm.

Da die Schlauchhülle nur gedehnt wird, wird die Schichtdicke insgesamt dünner und somit wird das Verhältnis von gekranzter Länge zu der eingegangenen Länge besser. Die nutzbare Länge beim Füllen des Darmes ist nach dem Kranzprozess größer als die nutzbare Länge vor dem Kranzprozess.

Bei rauchdurchlässigen Darmsorten ist es z.B. wichtig, dass bei geforderter mechanischer Festigkeit die Schichtdicke möglichst gering ist. Insbesondere bezüglich größerer Durchlässigkeiten bietet dieses Verfahren Vorteile, weil der Darm bei diesem Verfahren eine insgesamt dünnere Schichtdicke erhält und damit mehr Rauch durchlässt als bei oben angegebenen Vergleichskranzverfahren.

Besondere Aufmerksamkeit legt der Verbraucher auf das wendelförmige Schälen des Darmes im verzehrfähigen Zustand der gefüllten Wurst. Unter dem wendelförmigen Schälen ist die Eigenschaft zu verstehen, die es erlaubt, den Darm von der Wurst in wendelförmigen Streifen abzuziehen. Diese Eigenschaft ist zum Portionieren wichtig. Durch die gleichmäßige Dicke über dem Umfang kann der Darm mit dem erfindungsgemäßen Verfahren mühelos wendelförmig entfernt (geschält) werden.

Weiterhin können Schlauchhüllen mit dünnerer Schichtdicke mit einer größeren Länge auf eine Raupenlänge gerafft werden. Größere Lauflängen verbessern bei gleicher Raffraupenlänge die Wirtschaftlichkeit beim Raffen und auch in nachfolgenden Schritt wie Füllen, weil der Anteil an Stillstandszeiten für Wechseln der Raffraupe verkürzt wird. Gegebenenfalls kann für eine Schlauchhülle mit dünnerer Schichtdicke auch eine kleinere und damit günstigere Clippsorte verwendet werden.

Gegenstand der Erfindung ist damit auch eine gekranzte Schlauchhülle aus thermoplastischem Material, wobei die Hülle eine auf den Kaliberumfang bezogene gleichmäßige Hüllendicke, aufweist, und wobei gleichmäßige Hüllendicke bedeutet, dass bei mindestens 30 in jeweils gleichem Abstand über den Kaliberumfang verteilten Messungen der Hüllendicke der Durchschnitt der 5 höchsten Werte der Dicke höchsten 1,28-fach, bevorzugt höchsten 1,25-fach, besonders bevorzugt höchsten 1,22-fach, über dem Durchschnitt der 5 niedrigsten Werte der Dicke liegt.

Die erfindungsgemäßen Hüllen weisen in der Regel eine Dicke auf, die zwischen 10 und 100 $\mu$m, bevorzugt zwischen 15 und 80 $\mu$m, liegt. Durch das erfindungsgemäße Verfahren kann erreicht werden, dass die Standardabweichung $\sigma_x$ vom Mittelwert der Hüllendicke höchstens 4 $\mu$m, bevorzugt höchstens 3,5 $\mu$m, weiter bevorzugt höchstens 3,3 $\mu$m, besonders bevorzugt höchstens 3 $\mu$m, beträgt.

Die Standardabweichung $\sigma_x$ der Grundgesamtheit kann mit Hilfe der Formel (1) geschätzt werden. Dabei ist $s_x$* der Schätzer für die Standardabweichung $\sigma_x$ der Grundgesamtheit, $N$ der Stichprobenumfang, $x_i$ der Messwert am $i$-ten Element der Stichprobe, und es gilt Formel (2) für das arithmetische Mittel der Stichprobe. Im Rahmen der Erfindung kann ab einem Stichprobenumfang von $N$= 30 in jeweils gleichem Abstand über den Kaliberumfang verteilten Messwerten die Standardabweichung $\sigma_x$ durch den Schätzer $s_x$* ersetzt werden.

$$s_X^* := \sqrt{\frac{1}{N-1}\sum_{i=1}^{N}(x_i - \bar{x})^2} \qquad (1) \qquad\qquad \bar{x} = \frac{1}{N}\sum_{i=1}^{N}x_i \qquad (2)$$

Die erfindungsgemäßen gekranzten Schlauchhüllen weisen typischerweise ein Kaliber von 20 bis 80 mm, bevorzugt 25 bis 70 mm, besonders bevorzugt 30 bis 60 mm, auf. Der äußere Kranzdurchmesser derartiger Schlauchhüllen beträgt üblicherweise 60 bis 400 mm, bevorzugt 70 bis 350 mm, weiter bevorzugt 75 bis 300 mm, und besonders bevorzugt 80 bis 260 mm.

Im Rahmen der Erfindung können die gekranzten Schlauchhülle ein- oder mehrschichtig sein, wobei das thermoplastische Material gegebenenfalls für jede der Schichten unabhängig voneinander ausgewählt sein kann. Das thermoplastische Material kann für jede der Schichten unabhängig voneinander ein Polyamid- (PA), Ethylenvinylalkohol- (EVOH), Polyester- und/oder Polyolefin-basierter (PO) Kunststoff sein. Bevorzugt ist ein 3- bis 7-schichtiger Aufbau mit Schichten auf Basis von Polyamid und Polyolefin, wobei besonders bevorzugt die äußeren Schichten Polyamid oder auf Basis von Polyamid sind. Besonders bevorzugt sind 3- bis 5-schichtige Darmaufbauten des Typs PA/PA/PA, PA/PO/PA und PA/xy/xy/xy/PA, mit xy= Polyamid- oder Polyolefin-basiertem Kunststoff.

Des Weiteren können die gekranzten Schlauchhülle uni- oder biaxial verstreckt sein, wobei biaxial verstreckte Hüllen bevorzugt sind. Unabhängig davon kann das Hüllenmaterial auch schrumpffähig oder nicht schrumpffähig sein, wobei schrumpffähige Hüllen bevorzugt sind.

Die erfindungsgemäßen gekranzten Schlauchhüllen können zum Beispiel als Nahrungsmittelhüllen, und bevorzugt als Wursthüllen verwendet werden.

Gegenstand der Erfindung ist auch ein Verfahren zum Betreiben einer Kranzvorrichtung, die an sich bekannt sein kann, umfassend ein Kranzwerkzeug, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, wenn die Kranzvorrichtung so betrieben wird, dass mittels Kraftübertragung durch die Führungsrollen zusätzlich ein solcher Zug auf die Schlauchhülle ausgeübt wird, dass diese insgesamt gestreckt wird.

Beansprucht wird auch die Verwendung einer Kranzvorrichtung, die an sich bekannt sein kann, umfassend ein Kranzwerkzeug, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird zum Herstellen einer gekranzten Schlauchhülle mit gleichmäßiger Schichtdicke über ihren ganzen Kaliberumfang.

Insbesondere wird die Verwendung einer solchen Kranzvorrichtung beansprucht, wenn die Kranzvorrichtung derart verwendet wird, dass mittels Kraftübertragung durch die Führungsrollen zusätzlich ein solcher Zug auf die Schlauchhülle ausgeübt wird, dass diese insgesamt gestreckt wird.

Figur 1 zeigt schematisch ein Kranzwerkzeug einer Kranzvorrichtung, wobei der aufgeblasene Darm (1) in der Vorheizung (2) über seinen Umfang mit Wärme beaufschlagt wird. Innerhalb des Kranzwerkzeugs (3) wird der Darm durch innere (4) und durch äußere (5) Rollen, die beide in konvexer Ausführung ausgestattet sind, geführt. Durch die inneren Schlitzdüsen (6) wird Wärme vom Innenrohr und über äußeren Schlitzdüsen (7) vom Außenrohr an die Schlauchhülle geführt.

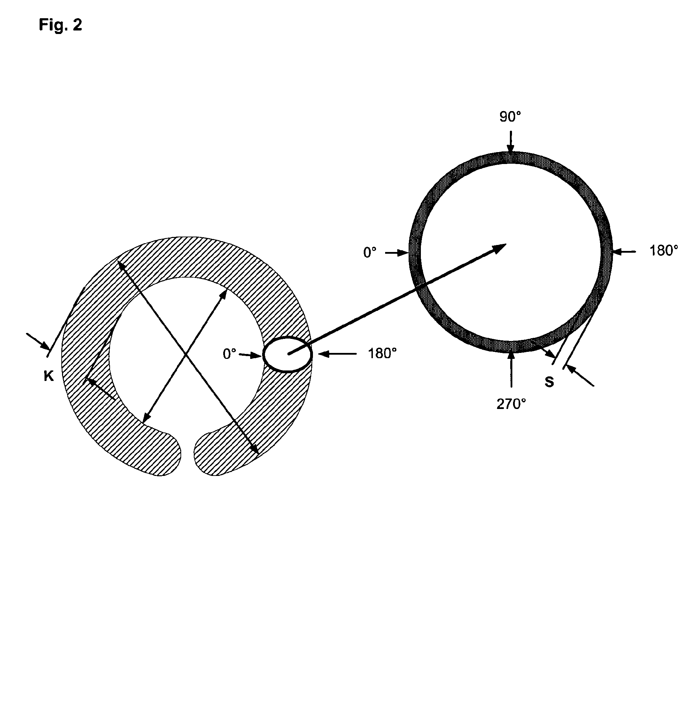

Figur 2 zeigt auf der linken Seite schematisch eine Draufsicht auf eine gefüllte Kranzhülle. Der Buchstabe (K) bezeichnet das Füllkaliber, der Buchstaben (D) den Innendurchmesser und der Buchstaben (S) die Hüllendicke der Schlauchhülle. Die "Innenseite" eines Kranzabschnitts ist der Innendurchmesserseite zugewendet und bekommt die Gradzahl 0° zugeordnet und die "Außenseite" ist der Außendurchmesserseite zugewendet und bekommt die Gradzahl 180° zugeordnet. Weiterhin zeigt Figur 2 einen Querschnitt der Schlauchhülle mit entsprechend gekennzeichneten Winkellagen 0°, 90°, 180° und 270°.

Figur 3 zeigt die Verteilung der Schichtdicke über den Kaliberumfang eines Abschnittes einer erfindungsgemäß gekranzten Hülle in Abhängigkeit von der Position auf dem Umfang.

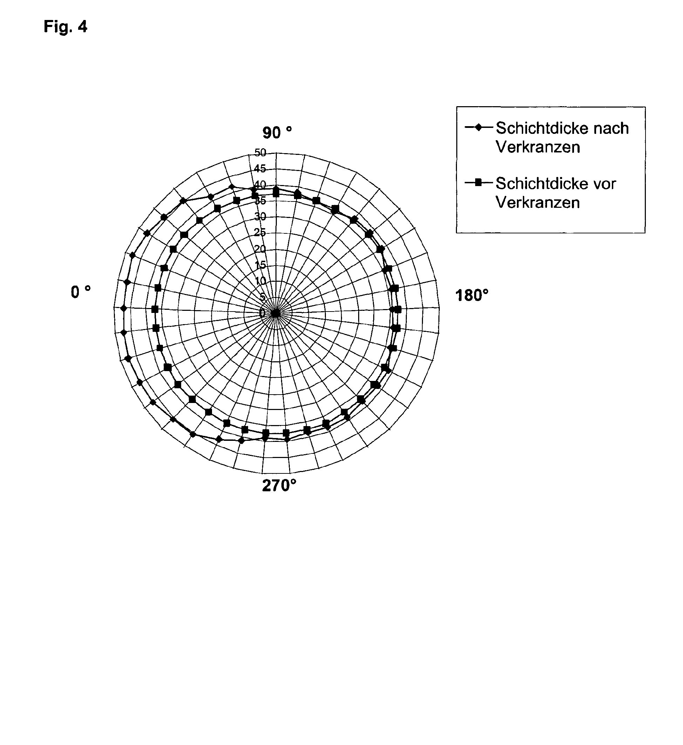

Figur 4 zeigt die Verteilung der Schichtdicke über den Kaliberumfang eines Abschnittes einer nicht erfindungsgemäß gekranzten Hülle in Abhängigkeit von der Position auf dem Umfang.

Figur 5 zeigt die Längs- und Querverformungen sowie die Flächenverformung über den Kaliberumfang verteilt bei einer erfindungsgemäßen Kranzhülle.

Figur 6 zeigt die Längs- und Querverformungen sowie die Flächenverformung über den Kaliberumfang verteilt bei einer nicht erfindungsgemäßen Kranzhülle.

**Beispiele**

Gemäß Tabelle 1 wurden in den Beispielen 1 und 2 Schlauchhüllen nach erfindungsgemäßer Methode und in den Vergleichsbeispielen V1 und V2 Schlauchhüllen nach herkömmlicher Methode verkranzt. Die Ergebnisse sind in Tabelle 1 gezeigt.

Bei den Schlauchhüllen handelt es sich um Walsroder® K smok 40 und Walsroder® K norm 43 der Firma CaseTech GmbH mit dreischichtigem PA-Aufbau bzw. mit fünfschichtigem Aufbau umfassend außenliegende PA-basierte Schichten und einer innenliegenden Polyolefin-basierten Haftvermittlerschicht.

Die in der Tabelle angegebenen 4 Darmsorten wurden alle auf einer wie oben beschriebenen an sich üblichen und im Handel erhältlichen Kranzdarmanlage mit folgenden Bedingungen verkranzt: Das Kranzwerkzeug weist nahezu zwei vollständige Wendeln (2x 360°) auf, in denen der Schlauch erwärmt und durch Rollen geführt wird. Die Einlaufgeschwindigkeit betrug in allen Fällen 30 m/min, wobei die Rollengeschwindigkeit auf der Innenseite auf 31 m/min und auf der Außenseite auf 33 m/min eingestellt wurde. Im erfindungsgemäßen Fall betrug die Auslaufgeschwindigkeit 31 m/min, da der Darm insgesamt leicht gestreckt wurde. Im nicht-erfindungsgemäßen Fall war die Auslaufgeschwindigkeit 25 m/min, was auf das Schrumpfen des Schlauches im Kranzwerkzeug hinweist. Temperaturen:

Vorheizung 180 °C; Innenseite 220 °C und Außenseite 210 °C. Für die erfindungsgemäßen Muster 1 und 2 wurden die Oberflächen der Rollen innerhalb des Kranzwerkzeuges zu den Vergleichsmustern verändert. Die Oberfläche unterscheidet sich in der Traktionsfähigkeit der Beschichtung. Bei den Vergleichsmustern bestand die Oberfläche aus Teflon und bei den erfindungsgemäßen Mustern bestand die Oberfläche dieser Rollen aus einer Beschichtung, wie sie z.B. von der Firma Impreglon unter der Bezeichnung PlasmaCoat 60301/1008 F vertrieben wird. Die PlasmaCoat-Beschichtung ermöglicht es durch ihre Reibeigenschaft, einen Zug auf die Hülle auszuüben. Die teflonbeschichteten Rollen im nicht-erfindungsgemäßen Fall hingegen drehen schneller als die Auslaufgeschwindigkeit ist, weisen also einen erheblichen Schlupf auf.

Die Hüllendicke der gekranzten Schlauchhülle über den Kaliberumfang wird nach dem Kranzen durch eine mechanische Abtastung nach DIN 53370 vermessen. Die auf der Schlauchhülle liegende Messplatte hat einen relativ kleinen Durchmesser von 3 mm, um nur die Dicke der Schlauchhülle und nicht die Verformung mit zu erfassen. Bei der Messung wird der Tastkopf über die aufgeschnittene Schlauchfolie in regelmäßigen Abständen geführt, so dass 30 oder mehr Messpunkte am Umfang erreicht werden. Die Genauigkeit des Messung beträgt ca. plus minus 0,5 $\mu$m.

Zur Bestimmung der Gesamtflächenverformung wird ein Querverformungsprofil und ein Längsverformungsprofil mit jeweils mindestens 24 in jeweils gleichem Abstand über den Kaliberumfang verteilten Messwerten erstellt (wie beispielsweise in den Figuren 5 und 6 gezeigt). Dazu werden vor dem Kranzprozess auf die Schlauchhülle quadratische Karos mit 5 mm Kantenlänge im Flexodruck oder im Tiefdruck gedruckt. Nach dem Kranzprozess werden die vormals quadratischen Karos in ihren Dimensionen und bezogen auf der Position am Umfang mit einem Lineal vermessen. Aus den gemessenen Quer- und Längskantenlängen werden dann Querverformungsprofil und Längsverformungsprofil erstellt. Aus diesen Profilen wird dann ein Flächenverformungsprofil gebildet (wie z.B. in den Figuren 5 und 6 gezeigt) und das Flächenintegral bestimmt. Dabei wird die Fläche zwischen x-Achse und Kurve im positive y-Achsenbereich positiv gewertet und die Fläche zwischen x-Achse und Kurve im negativen y-Achsenbereich negativ.

Für die Bestimmung des Rauchübergangs werden die Kunststoffschlauchhüllen vor dem Füllen mit z.B. Teewurst zunächst gewässert, mit der Wurstmasse gefüllt, umgerötet und dann in einer Räucherkammer geräuchert. Die Räucherbedingungen sind: 23 °C bei 85% r.F.. Es wird innerhalb von 6 Stunden 6 x 25 min Rauch eingeblasen, dazwischen finden Pausen bei bleibenden 23 °C statt.

Nach dem Rauchvorgang wird die Schlauchhülle entfernt und durch visuelles Betrachten wird der Grad der Verfärbung über den Umfang und im Vergleich zu nicht nach dem erfindungsgemäßen Verfahren hergestellten und geräucherten Kranzhüllen bestimmt. Insbesondere beim Vergleich der Innenseite (Gradzahl 0°) zur Außenseite (Gradzahl 180°) kann eine praxisgerechte Aussage bezüglich der Durchlässigkeit über dem Umfange erfolgen. Wenn bei der Beurteilung zwischen der Innenseite und der Aussehen in geschmacklicher und optischer Hinsicht keinen Unterschied erkannt wird, wird die Note 1 und bei sehr großen Unterschieden zwischen den Seiten die Note 5 vergeben.

Durch die gleichmäßige Hüllendicke über den Kaliberumfang kann der erfindungsgemäß hergestellte Darm mühelos wendelförmig von der Wurst entfernt (geschält) werden. Die Beurteilung erfolgt in Schulnoten. Die Note 1 wird für ein sehr gleichmäßiges Schälergebnis und die Note 5 für mangelhaftes Schälergebnis vergeben.

Tabelle 1: Ergebnisse Vergleichsbeispiele V1 und V2 und Beispiele 1 und 2

| Beispiel | | 1 | 2 | V1 | V2 |
|---|---|---|---|---|---|
| Bezeichnung gekranzter Darm | | K smok 40 Kranz | K norm 43 Kranz | K smok 40 Kranz | K norm 43 Kranz |
| Kranzverfahren | | gemäß Erfindung | gemäß Erfindung | nicht gemäß Erfindung | nicht gemäß Erfindung |

(fortgesetzt)

| Beispiel | | 1 | 2 | V1 | V2 |
|---|---|---|---|---|---|
| Hüllendicke im ungekranzten Zustand | $\mu$m | 27 | 42 | 27 | 42 |
| Mittelwert der 5 größten Hüllendicken | $\mu$m | 24,0 | 37,5 | 36,9 | 60,1 |
| Mittelwert der 5 kleinsten Hüllendicken | $\mu$m | 19,5 | 29,4 | 25,9 | 42,5 |
| Verhältnis der 5 größten zu den 5 kleinsten Hüllendickenwerten | | 1,23 | 1,28 | 1,42 | 1,42 |
| Delta Max-Min der Hüllendicke | $\mu$m | 4,5 | 8,1 | 10,6 | 17,6 |
| Mittelwert der Hüllendicke nach Kranzen (36 Messwerte) | $\mu$m | 21,60 | 36,44 | 30,88 | 49,91 |
| Schätzer $S_x^*$ der Standardabweichung der Hüllendicke | $\mu$m | 1,73 | 3,26 | 4,23 | 6,64 |
| Gesamtflächenverhältnis größer 10 % an allen Stellen des Umfangs | | ja | ja | nein | nein |
| Beurteilung nach Noten Gleichmäßigkeit des Rauchübergangs | | 1 | 2 | 5 | 5 |
| Beurteilung nach Noten wendelförmiges Schälen | | 1 | 2 | 5 | 5 |

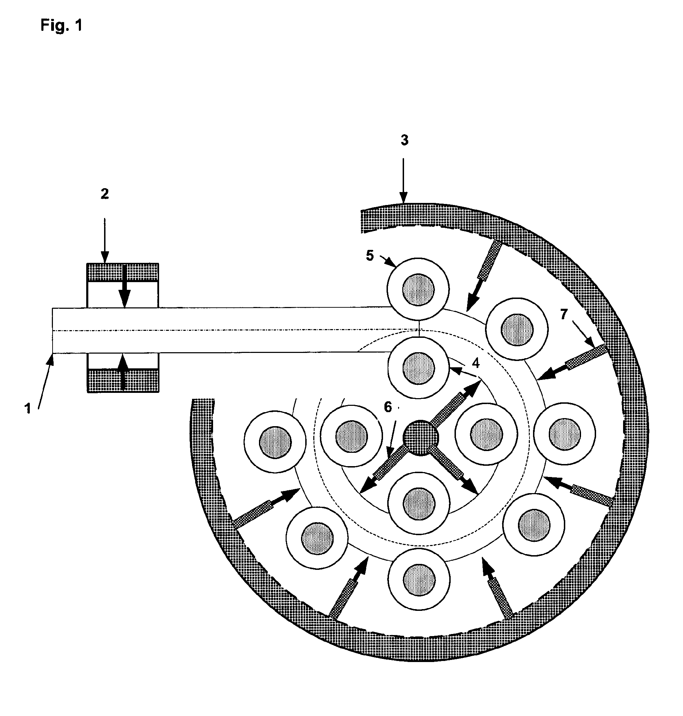

Bezugszeichenliste Figur 1

(1)   Schlauchhülle
(2)   Vorheizung
(3)   Kranzwerkzeug
(4)   innere Führungsrollen
(5)   äußere Führungsrollen
(6)   innere Schlitzdüsen
(7)   äußere Schlitzdüsen

**Patentansprüche**

1. Gekranzte Schlauchhülle aus thermoplastischem Material, **dadurch gekennzeichnet, dass** die Hülle eine auf den Kaliberumfang bezogene gleichmäßige Hüllendicke aufweist, wobei gleichmäßige Hüllendicke bedeutet, dass bei mindestens 30 in jeweils gleichem Abstand über den Kaliberumfang verteilten Messungen der Hüllendicke der Durchschnitt der 5 höchsten Werte der Dicke höchstens 1,28-fach, bevorzugt höchstens 1,25-fach, besonders bevorzugt höchstens 1,22-fach, über dem Durchschnitt der 5 niedrigsten Werte der Dicke liegt.

2. Gekranzte Schlauchhülle nach Anspruch 1, **dadurch gekennzeichnet, dass** die Hülle eine Dicke zwischen 10 und 100 $\mu$m, bevorzugt zwischen 15 und 80 $\mu$m, aufweist.

3. Gekranzte Schlauchhülle nach einem der vorherigen Ansprüche, **dadurch gekennzeichnet, dass** die Standardabweichung $\sigma_x$ vom Mittelwert der Hüllendicke höchstens 4 $\mu$m, bevorzugt höchstens 3,5 $\mu$m, besonders bevorzugt höchstens 3 $\mu$m, beträgt.

4. Gekranzte Schlauchhülle nach einem der vorherigen Ansprüche, **dadurch gekennzeichnet, dass** das Kaliber der Schlauchhülle 20 bis 80 mm, bevorzugt 25 bis 70 mm, besonders bevorzugt 30 bis 60 mm, beträgt.

5. Gekranzte Schlauchhülle nach einem der vorherigen Ansprüche, **dadurch gekennzeichnet, dass** der äußere Kranzdurchmesser 60 bis 400 mm, bevorzugt 70 bis 350 mm, weiter bevorzugt 75 bis 300 mm, besonders bevorzugt 80 bis 260 mm, beträgt.

6. Gekranzte Schlauchhülle nach einem der vorherigen Ansprüche, **dadurch gekennzeichnet, dass** die Hülle ein- oder mehrschichtig ist, wobei das thermoplastische Material gegebenenfalls für jede der Schichten unabhängig voneinander ausgewählt sein kann, wobei bevorzugt das thermoplastische Material für jede der Schichten unabhängig voneinander ein Polyamid-, Polyester- und/oder Polyolefin-basierter Kunststoff ist.

7. Gekranzte Schlauchhülle nach einem der vorherigen Ansprüche, **dadurch gekennzeichnet, dass** die Hülle uni- oder biaxial verstreckt ist und/oder das Hüllenmaterial nicht schrumpffähig oder schrumpffähig ist.

8. Gekranzte Schlauchhülle nach einem der vorherigen Ansprüche, wobei die gekranzte Schlauchhülle hergestellt wird mittels einer ein Kranzwerkzeug umfassenden Kranzvorrichtung, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, **dadurch gekennzeichnet, dass** mittels Kraftübertragung durch die Führungsrollen zusätzlich ein solcher Zug auf die Schlauchhülle ausgeübt wird, dass diese insgesamt gestreckt wird.

9. Verwendung einer gekranzte Schlauchhülle nach einem der vorherigen Ansprüche als Nahrungsmittelhülle, insbesondere als Wursthülle.

10. Verfahren zum Herstellen einer gekranzten Schlauchhülle mit gleichmäßiger Schichtdicke über ihren ganzen Kaliberumfang mittels einer ein Kranzwerkzeug umfassenden Kranzvorrichtung, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, **dadurch gekennzeichnet, dass** mittels Kraftübertragung durch die Führungsrollen zusätzlich ein solcher Zug auf die Schlauchhülle ausgeübt wird, dass diese insgesamt gestreckt wird.

11. Verfahren zum Betreiben einer Kranzvorrichtung umfassend ein Kranzwerkzeug, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird, **dadurch gekennzeichnet, dass** mittels Kraftübertragung durch die Führungsrollen zusätzlich ein solcher Zug auf die Schlauchhülle ausgeübt wird, dass diese insgesamt gestreckt wird.

12. Verwendung einer Kranzvorrichtung umfassend ein Kranzwerkzeug, wobei zum Zwecke des Kranzens eine zunächst ungekranzte Schlauchhülle aus thermoplastischem Material in abschnittsweise aufgeblasenem Zustand der Kranzvorrichtung zugeführt und mittels angetriebener Führungsrollen durch die Kranzvorrichtung unter Erwärmen und unter Bildung eines wendelförmigen Schlauches hindurchgeführt wird zum Herstellen einer gekranzten Schlauchhülle mit gleichmäßiger Schichtdicke über ihren ganzen Kaliberumfang.

13. Verwendung nach Anspruch 12, **dadurch gekennzeichnet, dass** die Kranzvorrichtung derart verwendet wird, dass mittels Kraftübertragung durch die Führungsrollen zusätzlich ein solcher Zug auf die Schlauchhülle ausgeübt wird, dass diese insgesamt gestreckt wird.

14. Verfahren, Vorrichtung oder Verwendung nach einem der Ansprüche 10 bis 13, **dadurch gekennzeichnet, dass** die Schlauchhülle das Kranzwerkzeug mit einer auf den Kaliberumfang bezogenen gleichmäßigen Hüllendicke verlässt, wobei gleichmäßige Hüllendicke bedeutet, dass bei mindestens 30 in jeweils gleichem Abstand über den Kaliberumfang verteilten Messungen der Hüllendicke der Durchschnitt der 5 höchsten Werte der Dicke höchsten 1,28-fach, bevorzugt höchsten 1,25-fach, besonders bevorzugt höchsten 1,22-fach, über dem Durchschnitt der 5 niedrigsten Werte der Dicke liegt.

15. Verfahren, Vorrichtung oder Verwendung nach einem der Ansprüche 10 bis 14, **dadurch gekennzeichnet, dass** die Schlauchhülle das Kranzwerkzeug mit einer Längsverformung in jedem auf dem Kaliberumfang liegenden Abschnitt und bezogen auf die unverkranzt eingesetzte Hülle von größer -30%, bevorzugt größer -20%, besonders bevorzugt größer -10%, verlässt.

16. Verfahren, Vorrichtung oder Verwendung nach einem der Ansprüche 10 bis 15, **dadurch gekennzeichnet, dass** die Schlauchhülle das Kranzwerkzeug mit einer Flächenverformung in jedem auf dem Kaliberumfang liegenden Abschnitt und bezogen auf die unverkranzt eingesetzte Hülle von größer -10%, bevorzugt größer 0%, besonders bevorzugt größer 5%, verlässt.

17. Verfahren, Vorrichtung oder Verwendung nach einem der Ansprüche 10 bis 16, **dadurch gekennzeichnet, dass** die Wärmebehandlung durch an die Innenseite der Schlauchwendel herangeführte Heißluft erfolgt und die Heißluft gleichmäßig über den Umfang der Schlauchhülle verteilt wird.

18. Verfahren, Vorrichtung oder Verwendung nach einem der Ansprüche 10 bis 17, **dadurch gekennzeichnet, dass** die Schlauchhülle vor dem Einlaufen in das Kranzwerkzeug und/oder auch von außen innerhalb des Kranzwerkzeuges erwärmt wird.

**Fig. 1**

**Fig. 2**

**Fig. 3**

90 °

0 °

180°

270°

30
25
20
15
10
5

Schichtdicke vor
Verkranzen

Schichtdicke nach
Verkranzen

**Fig. 4**

**Fig. 5**

Grad am Umfang 0° = Innenseite

Fig. 6

Europäisches
Patentamt
European
Patent Office
Office européen
des brevets

**EUROPÄISCHER RECHERCHENBERICHT**

**Nummer der Anmeldung**

EP 10 00 2469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 650 526 C (BECKER & CO NATURINWERK) 24. September 1937 (1937-09-24) * Seite 1, Zeile 1 - Seite 3, Zeile 93; Ansprüche 1-3; Abbildungen 1,2 * ----- | 1-18 | INV. A22C13/00 |
| Y | DE 10 2005 037275 A1 (KALLE GMBH [DE]) 22. Februar 2007 (2007-02-22) * Zusammenfassung; Ansprüche 1-11 * * Absätze [0001] - [0045] * ----- | 1-18 | |
| A | DE 195 04 704 A1 (BECKER & CO NATURINWERK [DE]) 14. August 1996 (1996-08-14) * Zusammenfassung; Ansprüche 1-19; Abbildungen 1-3 * * Spalte 1, Zeile 3 - Spalte 3, Zeile 20; Beispiele 1-4 * ----- | 1-18 | |
| A | US 4 356 201 A (WINKLER BRUNO) 26. Oktober 1982 (1982-10-26) * Zusammenfassung; Ansprüche 1-6; Abbildungen 1-3 * * Spalte 1, Zeile 11 - Spalte 6, Zeile 40 * ----- | 1-18 | RECHERCHIERTE SACHGEBIETE (IPC) A22C |
| A | FR 812 048 A (NATURIN G M B H) 28. April 1937 (1937-04-28) * Seite 1, Zeile 1 - Seite 6, Zeile 20; Ansprüche 1-9; Abbildungen 1-4 * ----- | 1-18 | |

Der vorliegende Recherchenbericht wurde für alle Patentansprüche erstellt

| Recherchenort | Abschlußdatum der Recherche | Prüfer |
|---|---|---|
| Den Haag | 6. September 2010 | Rojo Galindo, Ángel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 2469

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2010

| Im Recherchenbericht angeführtes Patentdokument | Datum der Veröffentlichung | Mitglied(er) der Patentfamilie | Datum der Veröffentlichung |
|---|---|---|---|
| DE 650526 C | 24-09-1937 | KEINE | |
| DE 102005037275 A1 | 22-02-2007 | EP 1915254 A1 | 30-04-2008 |
| | | WO 2007017215 A1 | 15-02-2007 |
| DE 19504704 A1 | 14-08-1996 | AT 190801 T | 15-04-2000 |
| | | AU 699110 B2 | 19-11-1998 |
| | | AU 4621996 A | 04-09-1996 |
| | | BR 9607330 A | 25-11-1997 |
| | | CZ 9702567 A3 | 17-12-1997 |
| | | DK 809440 T3 | 28-08-2000 |
| | | WO 9625047 A1 | 22-08-1996 |
| | | EP 0809440 A1 | 03-12-1997 |
| | | ES 2146385 T3 | 01-08-2000 |
| | | JP 3725157 B2 | 07-12-2005 |
| | | JP 2000513561 T | 17-10-2000 |
| | | NO 973702 A | 12-08-1997 |
| | | NZ 300931 A | 29-11-1999 |
| | | PL 321800 A1 | 22-12-1997 |
| | | RU 2180170 C2 | 10-03-2002 |
| US 4356201 A | 26-10-1982 | BE 812660 A1 | 23-09-1974 |
| | | CA 1017193 A1 | 13-09-1977 |
| | | CH 584009 A5 | 31-01-1977 |
| | | DE 2314767 A1 | 26-09-1974 |
| | | DK 143684 B | 28-09-1981 |
| | | ES 424560 A1 | 01-06-1976 |
| | | FI 55603 B | 31-05-1979 |
| | | FR 2222016 A1 | 18-10-1974 |
| | | GB 1473421 A | 11-05-1977 |
| | | GB 1473422 A | 11-05-1977 |
| | | JP 1231552 C | 26-09-1984 |
| | | JP 50069276 A | 10-06-1975 |
| | | JP 58057138 B | 19-12-1983 |
| | | JP 1520274 C | 29-09-1989 |
| | | JP 59066832 A | 16-04-1984 |
| | | JP 64000005 B | 05-01-1989 |
| | | LU 69691 A1 | 17-10-1974 |
| | | NL 7403830 A | 26-09-1974 |
| | | SE 428415 B | 04-07-1983 |
| FR 812048 A | 28-04-1937 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4339337
- EP 530538 A
- DE 19650873 A1
- EP 0878318 A1
- EP 0744273 A1
- DE 19607340 A1